# FASCICULE DE BREVET EUROPEEN

(11) **EP 3 734 129 B1**
(45) Date de publication et mention de la délivrance du brevet: **14.12.2022**
(21) Numéro de dépôt: 20171693.3
(22) Date de dépôt: 28.04.2020
(51) Int. Cl.: F16L 21/00, F16L 21/03, F16L 21/06

(54) **DISPOSITIF DE SERRAGE COMPRENANT UN COLLIER ET UN JOINT D'ETANCHEITE**
VERSCHLUSSVORRICHTUNG, DIE EINE SCHELLE UND EINE DICHTUNGSFUGE UMFASST
CLAMPING DEVICE COMPRISING A COLLAR AND A SEALING GASKET

(30) Priorité: 03.05.2019 FR 1904673
(43) Date de publication de la demande: 04.11.2020
(73) Titulaire: Caillau, 92130 Issy-les-Moulineaux (FR)
(72) Inventeur: RIGOLLET, Nicolas, 41200 Romorantin-Lanthenay (FR); CHAGNON, Christophe, 41700 Contres (FR)
(74) Mandataire: Cabinet Beau de Loménie

(56) Documents cités:
- EP-A1- 1 181 477
- EP-A1- 1 816 325
- EP-A1- 1 875 116
- US-A1- 2011 018 263

## Description

### Domaine Technique

Le présent exposé se rapporte à un dispositif de serrage comprenant un collier. Il se rapporte en particulier à un dispositif servant à serrer un tube à l'aide d'un collier. Il s'agit en particulier de raccorder deux tubes emmanchés l'un sur l'autre, le collier étant serré sur l'extrémité du tube extérieur qui est emmanchée sur le tube intérieur.

### Technique antérieure

Le document EP 1 875 116 divulgue un dispositif comprenant un manchon, susceptible d'être disposé autour des extrémités en regard des deux tubes et pourvu de moyens pour diminuer son diamètre sous l'action de moyens de serrage. Le dispositif comprend une bague d'étanchéité disposée dans le manchon pour entourer les extrémités des tubes. Cette bague est constituée par une bande enroulée sur elle-même, dont les extrémités portent au moins un ensemble mâle/femelle apte à venir en engagement de contact lors du serrage. Au moins l'une des conformations mâle et femelle dans l'ensemble mâle/femelle présente des bords de contact formés sur les pattes de contact aptes, lors de l'engagement de la conformation mâle dans la conformation femelle sous l'effet du serrage à se plier dans le sens favorisant la pénétration de la conformation mâle dans la conformation femelle.

Le brevet US 6 199 921 divulgue un dispositif de serrage pour deux tubes emmanchés l'un sur l'autre, le tube extérieur présentant une découpe favorisant sa déformation lors du serrage. Ainsi, l'étanchéité de la liaison entre les deux tubes est obtenue par le fait que le tube extérieur se déforme suffisamment pour que sa périphérie interne vienne en contact intime avec la périphérie externe du tube intérieur, et que la découpe du tube extérieur favorisant sa déformation soit correctement pontée par le collier de serrage.

Pour raccorder de manière étanche deux tubes emmanchés l'un sur l'autre, on peut par ailleurs imaginer de disposer un joint d'étanchéité à l'interface entre les deux tubes, et de serrer les tubes emmanchés. Par exemple, le joint d'étanchéité peut être disposé entre la périphérie interne du tube extérieur et la périphérie externe du tube intérieur. Cependant, la mise en place d'un tel joint d'étanchéité et son maintien en position lors du serrage peut s'avérer délicate, ce qui complique les manœuvres d'emmanchement des tubes et de serrage.

Pour pallier ces inconvénients, les brevets EP 2 598 785 et EP 3 232 107 proposent un système dans lequel le joint d'étanchéité est pré-monté dans le collier qui sert au serrage de l'emmanchement des tubes. Plus précisément, ce système comprend une rondelle qui comprend une partie annulaire fermée formant le joint d'étanchéité et des pattes reliant ce joint d'étanchéité au collier. Le joint d'étanchéité annulaire est initialement maintenu à une distance significative de la périphérie interne du collier de manière à permettre l'engagement du tube externe entre le joint d'étanchéité et cette périphérie interne. Ensuite, le tube interne est lui-même engagé de manière à venir au contact du joint d'étanchéité. Ce dispositif est particulièrement adapté au serrage de deux tubes emmanchés ensemble et présentant des surfaces évasées en saillie radiale servant d'appui pour un collier de serrage qui comprend un renfoncement pouvant loger ces surfaces évasées en saillie radiale, le joint annulaire fermé ayant lui-même une forme tronconique adaptée à ces surfaces évasées.

La demande de brevet US 2011/0018263 divulgue un dispositif de serrage pour raccorder deux tubes. Ce dispositif comprend un collier et un joint d'étanchéité destiné à se trouver entre les deux tubes raccordés. Pour cela, le joint d'étanchéité est pré-monté sur l'extrémité de l'un des tubes, en particulier par adhésif. Le dispositif de serrage ne peut donc pas être présenté comme un tout, comprenant le collier et le joint d'étanchéité, qui puisse être monté sur les tubes pour les raccorder. En d'autres termes, dans ce dispositif, le joint d'étanchéité ne peut pas être prémonté dans la ceinture.

La demande de brevet EP 1 816 325 divulgue également un dispositif de serrage comprenant un collier et un joint d'étanchéité, dans lequel ce joint n'est pas prémonté dans la ceinture.

### Exposé de l'invention

Il existe un besoin pour améliorer l'état de la technique, notamment en proposant un dispositif comprenant un joint d'étanchéité pré-monté dans le collier, adapté généralement au serrage de tubes emmanchés l'un sur l'autre, même si ces tubes ne présentent pas d'évasé radial.

L'exposé vise à proposer un dispositif de serrage qui remédie au moins substantiellement aux inconvénients précités.

Ainsi, l'exposé se rapporte à un dispositif de serrage comprenant un collier qui présente une ceinture apte à adopter un état non serré et un état serré dans lequel son diamètre est réduit par rapport à l'état non serré, et un joint d'étanchéité disposé à l'intérieur de la ceinture en étant retenu axialement par rapport au collier, le joint d'étanchéité étant formé dans une bande, qui est enroulée sur elle-même et dont les extrémités sont configurées pour coopérer entre elles via un agencement d'étanchéité, dans lequel le joint d'étanchéité est pré-monté dans la ceinture de sorte que le collier et le joint pré-monté forment un composant, et dans lequel, dans l'état non serré de la ceinture, le joint d'étanchéité prémonté disposé à l'intérieur de la ceinture subit une contrainte vers la surface interne de la ceinture, le joint d'étanchéité étant configuré pour, alors qu'il est pré-monté dans la ceinture, être déformé élastiquement à l'encontre de cette contrainte pour permettre l'insertion d'un objet annulaire entre le joint d'étanchéité et la ceinture, et le joint d'étanchéité présente un bord arrière qui est pourvu d'au moins une rampe d'insertion inclinée vers l'axe d'enroulement de la bande dans le sens allant en s'éloignant axialement du joint d'étanchéité à partir dudit bord arrière pour favoriser un rapprochement des extrémités de la bande permettant l'insertion dudit objet annulaire entre le joint d'étanchéité et la ceinture.

Optionnellement, le joint d'étanchéité pré-monté est précontraint par la présence, autour dudit joint d'étanchéité, de la ceinture dans l'état non serré.

Optionnellement, la contrainte du joint d'étanchéité vers la surface interne de la ceinture est provoquée par la tendance de la bande à adopter un diamètre supérieur à celui imposé par la ceinture dans laquelle il est disposé alors que la ceinture est dans l'état non serré.

Optionnellement, la rampe d'insertion est formée par une patte dont l'extrémité libre est infléchie vers l'intérieur.

Optionnellement, le dispositif comprend un détrompeur angulaire de joint d'étanchéité configuré pour déterminer une position angulaire du joint d'étanchéité par rapport au collier.

Optionnellement, l'un des éléments formés par la ceinture et le joint d'étanchéité présente un bord de calage et l'autre élément présente une saillie de calage apte à coopérer avec le bord de calage pour retenir le joint d'étanchéité vis-à-vis d'un déplacement par rapport au collier.

Optionnellement, le joint d'étanchéité présente un bord avant pourvu d'au moins une butée configurée pour coopérer avec le bord avant de la ceinture pour retenir le joint d'étanchéité vis-à-vis d'un déplacement dans au moins une direction par rapport à la ceinture, la butée comprenant optionnellement une patte redressée vers l'extérieur.

Optionnellement, la ceinture présente une fenêtre dont le bord forme un bord de calage, et le joint d'étanchéité présente une patte de retenue redressée dans cette fenêtre.

Optionnellement, l'agencement d'étanchéité comprend une conformation d'engagement mâle/femelle formée aux extrémités de la bande formant le joint d'étanchéité.

Optionnellement, la ceinture et le joint d'étanchéité présentent des diamètres sensiblement inchangés d'un bord à l'autre.

Optionnellement, le collier présente des pattes de serrage, relevées radialement par rapport à la ceinture et aptes à être déplacées l'une par rapport à l'autre pour serrer le collier.

L'exposé se rapporte également à un ensemble de serrage de tube, comprenant un dispositif de serrage du type précité et un tube dont l'extrémité est apte à être insérée entre le joint d'étanchéité et la ceinture.

Optionnellement, l'ensemble comprend un détrompeur de position de tube déterminant une position angulaire du tube par rapport au moins l'un des éléments comprenant le joint d'étanchéité et le collier.

Optionnellement, le joint d'étanchéité présente une patte détrompeur de position de tube qui fait radialement saillie vers l'extérieur du joint d'étanchéité et qui est configurée pour être engagée dans une fente formée à l'extrémité du tube.

Optionnellement, le joint d'étanchéité comprend un organe anti-extraction, en particulier une languette anti-extraction, configuré pour coopérer avec une fenêtre du tube pour s'opposer à l'extraction du joint d'étanchéité hors du tube.

L'exposé sera bien compris et son objet apparaitra mieux à la lecture de la description détaillée qui suit, d'un mode de réalisation et de ses variantes, représentés à titre d'exemples non limitatifs.

### Brève description des dessins

[Fig. 1] La figure 1 montre en perspective éclatée un ensemble de serrage de tube comprenant un dispositif de serrage selon le présent exposé.
[Fig. 2] La figure 2 est une vue en perspective du dispositif de serrage comprenant un collier et un joint d'étanchéité.
[Fig. 3] La figure 3 montre le dispositif de serrage de la figure 2 à l'état dans lequel le joint d'étanchéité n'est pas disposé dans la ceinture du collier.
[Fig. 4] La figure 4 est une vue en perspective montrant le dispositif de serrage des figures précédentes monté à l'extrémité d'un tube externe, avant emmanchement d'un tube interne dans le tube externe.
[Fig. 5] La figure 5 est une vue analogue à la figure 1, pour une variante de réalisation.
[Fig. 6] La figure 6 est une vue analogue aux figures 1 et 5 pour une autre variante.

### Description des modes de réalisation

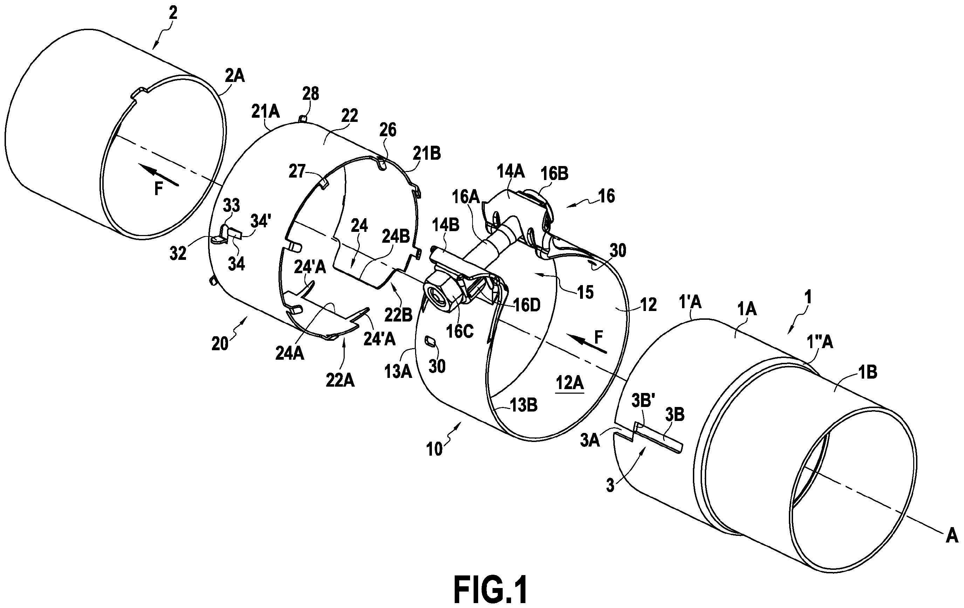

L'ensemble représenté sur la figure 1 comprend un dispositif de serrage qui comprend lui-même un collier 10 et un joint d'étanchéité 20. Cet ensemble comprend également un tube externe 1 et un tube interne 2. Le tube interne 2 est configuré pour être emmanché dans le tube externe 1 pour raccorder les deux tubes. Plus précisément, le tube interne 2 vient s'emmancher dans l'extrémité 1A du tube externe 1, autour de laquelle est alors placé le collier de serrage 10 pour serrer l'assemblage ainsi réalisé. Dans cette situation assemblée, le joint d'étanchéité 20 est lui-même disposé entre les tubes interne et externe. Pour l'emmanchement, on comprend que le joint d'étanchéité 20 vient se placer dans l'extrémité 1A du tube 1 autour de laquelle est disposé le collier de serrage 10, et le tube interne 2 vient s'emmancher dans le joint d'étanchéité 20.

En l'espèce, les parties des deux tubes 1 et 2 emmanchées l'une dans l'autre forment des surfaces cylindriques sans renflement. L'extrémité 1A du tube 1 est toutefois délimitée, du côté opposé à son extrémité libre 1'A, par un épaulement 1"A. L'extrémité 1A est ainsi élargie, alors que la partie restante 1B du tube 1 présente un diamètre analogue à celui du tube 2.

On remarque que le joint d'étanchéité 20 est formé dans une bande 22 qui est enroulée sur elle-même et dont les extrémités respectivement 22A et 22B coopèrent entre elles via un agencement d'étanchéité 24. En l'espèce, cet agencement d'étanchéité comprend une encoche 24A formée à l'extrémité 22A et délimitée entre des bords déformables 24'A, ainsi qu'une languette 24B formée à l'extrémité 22B. Les bords 24'A sont légèrement inclinés de sorte que la largeur de l'encoche 24A va en augmentant vers l'extrémité libre de l'extrémité 22A. De même, la largeur de la languette 24B va en augmentant à mesure qu'on s'éloigne de l'extrémité libre de l'extrémité 22B. Ainsi, plus la languette 24B pénètre dans l'encoche 24, plus le contact entre les bords de la languette et les bords de l'encoche est contraint, jusqu'à provoquer de légères déformations des bords de l'encoche. Les zones de contact entre la languette et les bords de l'encoche forment ainsi des contacts d'étanchéité. En l'espèce, les bords de l'encoche 24A sont formés sur des pattes déformables.

Il s'agit d'un exemple d'agencement d'étanchéité permettant la coopération entre les extrémités 22A et 22B de la bande 22 formant le joint d'étanchéité 20. D'autres agencements d'étanchéité peuvent être prévus, qu'ils soient comme en l'espèce prévus directement sur la bande 22, en une pièce avec elle, ou bien rapportés, par exemple en un matériau davantage déformable. L'étanchéité peut également être obtenue par un effet de chicane sans nécessairement mettre en œuvre les contraintes de contact et de déformation évoquées plus haut.

Quoi qu'il en soit, le joint d'étanchéité 20 est de type ouvert, c'est-à-dire que les extrémités de la bande 22 dans laquelle il est formé peuvent se déplacer l'une par rapport à l'autre pour augmenter ou réduire le diamètre de ce joint d'étanchéité. En l'espèce, le joint d'étanchéité 24 est formé en une seule pièce dans la bande 22, de sorte que l'on peut considérer qu'il est formé par la bande enroulée sur elle-même et présentant les diverses découpes et pattes qui vont être décrites dans la suite. En particulier, la bande 22 est métallique, en particulier dans un matériau de type acier inoxydable. La bande 22 peut être réalisée en un seul matériau, ou bien présenter plusieurs matériaux, par exemple plusieurs couches ou bandes élémentaires disposées les unes sur les autres. Par exemple, la bande peut comprendre deux bandes élémentaires analogues disposées l'une sur l'autre. Ainsi, la bande peut comprendre une bande élémentaire métallique, supportant une bande élémentaire à base de mica. Les deux bandes élémentaires peuvent être solidarisées l'une à l'autre par tout moyen approprié, par exemple par collage ou analogue, ou bien encore par des moyens mécaniques. De tels moyens mécaniques peuvent être des pattes de la bande élémentaire métallique repliées contre la bande élémentaire à base de mica ou engagées dans des trous ou des encoches de cette bande élémentaire, pour la maintenir contre la bande élémentaire métallique. Par exemple, la bande élémentaire à base de mica peut être réalisée dans un matériau de type connu sous la marque Cogemica Hi-temp^{®} résistant à des températures élevées et comprenant, en masse, 90 % de mica ou davantage et 10 % de liant ou moins.

Quel que soit son matériau, et notamment lorsqu'elle est en métal, la bande 22 peut avoir subi un traitement de surface, par exemple à base de zinc lamellaire, permettant de constituer une couche externe favorisant l'étanchéité. De même, le collier 10 et, éventuellement, les tubes 1 et 2 peuvent être métalliques.

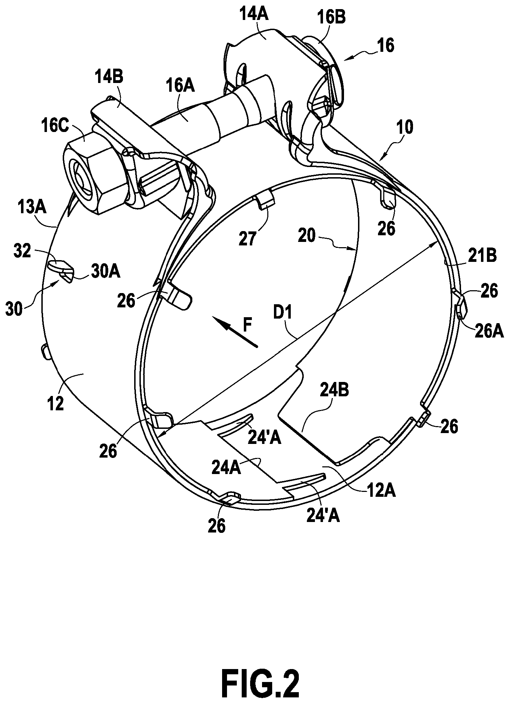

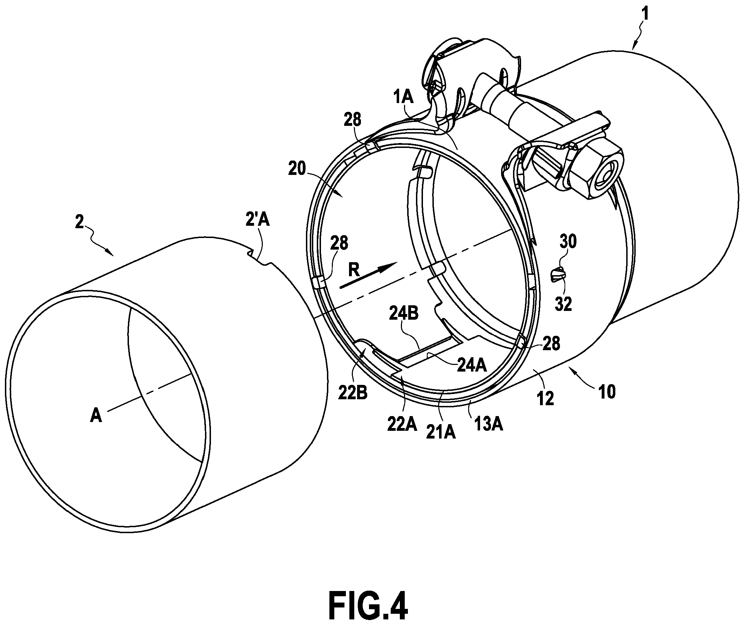

On décrit maintenant la figure 2, sur laquelle le joint d'étanchéité 20 est disposé à l'intérieur de la ceinture 12 du collier 10. Cette ceinture 12 définit une forme cylindrique et le joint d'étanchéité 20 est disposé à l'intérieur de ce cylindre. Sur la figure 2, le joint d'étanchéité 20 est pré-monté dans la ceinture, de sorte que le collier et le joint pré-monté forment un composant qui peut être apporté à l'extrémité d'un tube. Plus précisément, comme on le voit sur la figure 4, le composant formé par le collier et le joint d'étanchéité pré-monté peut être apporté à l'extrémité d'un premier tube 1 par une insertion de cette extrémité entre le joint et la ceinture. Il suffit alors d'emmancher un deuxième tube 2 dans le premier tube 1 puis de serrer la ceinture, pour raccorder les deux tubes de manière étanche.

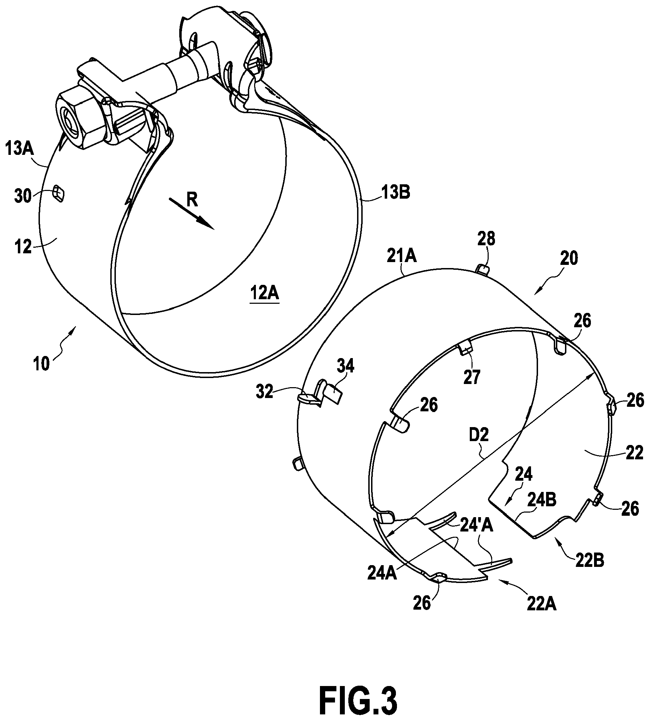

En comparant la figure 2 aux figures 1 et 3, on voit que, sur la figure 2, le joint d'étanchéité 20 est précontraint par la présence, autour de ce joint d'étanchéité, la ceinture 12 du collier. En effet, à l'état libre, ce joint d'étanchéité 20 présente un diamètre plus grand que celui délimité par la ceinture du collier. Ainsi, lorsque le joint d'étanchéité est dans le collier, il est contraint par la surface interne 12A de la ceinture 12 pour adopter un diamètre inférieur à celui qu'il aurait à l'état libre. En d'autres termes, le joint d'étanchéité 20 se plaque naturellement contre la ceinture 12 du collier 10. Etant un joint d'étanchéité ouvert, le joint d'étanchéité peut se comporter comme un ressort, son diamètre augmentant et diminuant selon que les extrémités 22A ou 22B de la bande 22 dans laquelle il est formé se rapprochent ou s'éloignent l'une de l'autre.

Alors que le dispositif de serrage est dans la situation représentée sur la figure 2, le joint d'étanchéité 20 étant plaqué contre la surface interne de la ceinture 12, un objet annulaire, en l'espèce l'extrémité 1A du tube 1, peut être introduit entre le joint d'étanchéité et la ceinture 12. Pour cela, il suffit de rapprocher l'une de l'autre ou les extrémités de la bande 22 formant le joint d'étanchéité pour que le diamètre de ce dernier se réduise, ménageant ainsi entre le joint d'étanchéité et la ceinture un espace annulaire permettant l'insertion de l'extrémité 1A du tube 1. En l'espèce, pour favoriser ce rapprochement des extrémités de la bande et donc cette réduction du diamètre du joint d'étanchéité, le joint d'étanchéité 20 présente un bord arrière 21B qui est pourvu de pattes 26 formant des rampes d'insertion.

Plus précisément, chaque patte 26 s'étend axialement vers l'arrière du joint d'étanchéité, son extrémité libre 26A étant infléchie vers l'intérieur. Ainsi, la surface externe de la patte 26 forme une rampe sur laquelle peut glisser l'extrémité libre de l'objet annulaire, en l'espèce l'extrémité 1A du tube 1, lors de son insertion entre le joint d'étanchéité et la ceinture. Plusieurs pattes 26 réparties angulairement peuvent être prévues. En l'espèce le joint d'étanchéité comporte six pattes 26.

Au sens du présent exposé, les qualificatifs « avant » et « arrière » sont entendus par rapport au sens d'emmanchement des tubes. Ainsi, le bord arrière 21B du joint d'étanchéité 20 est son bord qui, alors que ce joint d'étanchéité est disposé dans l'extrémité 1A du tube 1, est le plus éloigné de l'extrémité libre 1'A (extrémité avant) du tube 1 à partir de laquelle ce tube 1 est emmanché sur le tube 2. Par opposition, le bord avant 21A du joint d'étanchéité 20 est celui qui se trouve le plus près de l'extrémité libre 1'A du tube lorsque le joint d'étanchéité est disposé dans le tube 1. S'agissant du tube 1, l'épaulement 1"A précédemment évoqué est disposé à l'arrière de l'extrémité libre 1'A. S'agissant du tube 2, son extrémité libre 2A tournée vers le tube 1 est son extrémité avant.

Par ailleurs, on qualifiera de « intérieurs », les éléments qui sont disposés vers l'axe des tubes, du collier et du joint d'étanchéité. Lorsque l'ensemble est monté, ces différents éléments sont concentriques, leurs axes étant confondus dans l'axe A.

Lorsqu'il est disposé à l'intérieur de la ceinture 12, le joint d'étanchéité 20 est retenu axialement par rapport au collier 10. En l'espèce, plusieurs éléments contribuent à cette retenue axiale. D'une part, le bord avant 13A de la ceinture forme un bord de calage contre lequel viennent coopérer en butée des saillies de calage 28 formées sur le joint d'étanchéité 20. Ces saillies de calage 28 sont en l'espèce formées par des pattes 28 redressées radialement, formées sur le bord avant 21A du joint d'étanchéité 20. Les extrémités libres de ces pattes sont circonscrites dans un cercle de diamètre supérieur au diamètre interne de la ceinture 12 à l'état non serré de la ceinture. Ainsi, le joint d'étanchéité 20 peut être disposé dans le collier en engageant son bord arrière dans le collier, à partir du bord avant (bord de calage) de la ceinture, jusqu'à ce que les pattes 28 viennent en butée contre ce bord de calage 13A.

Une fois le joint d'étanchéité 20 en place dans le collier, cette retenue axiale s'oppose au déplacement du joint d'étanchéité vers l'arrière par rapport au collier, c'est-à-dire dans le sens R indiqué sur les figures 3 et 4. Ainsi, une fois que le système de serrage est en place à l'extrémité 1A du tube 1 comme représenté sur la figure 4, le tube 2 peut être emmanché dans le joint d'étanchéité 20 sans repousser ce dernier dans le sens R.

Par ailleurs, comme on le voit notamment sur la figure 2, la ceinture 12 présente une fenêtre 30 dont le bord 30A forme un bord de calage, et le joint d'étanchéité présente une saillie radiale engagée dans cette fenêtre. En l'espèce, la saillie radiale est formée par une patte de retenue 32 que présente le joint d'étanchéité et qui est redressée de manière à traverser la fenêtre 30 lorsque le joint d'étanchéité est monté dans le collier. En particulier, cette patte 32 est découpée dans la bande 22 formant le joint d'étanchéité, une découpe 33 subsistant alors dans la bande lorsque la patte est redressée.

Pour mettre en place le joint d'étanchéité 20 dans le collier 10, lors de l'insertion axiale précédemment évoquée, il suffit de légèrement comprimer le joint d'étanchéité pour que l'extrémité libre de la patte redressée 32 définisse une dimension diamétrale inférieure au diamètre que présente alors la ceinture 12, étant rappelé que le joint d'étanchéité est inséré dans le collier à l'état non serré de la ceinture.

En l'espèce, on voit que la ceinture 12 présente deux fenêtres 30 identiques, disposées de sorte que l'une se retrouve à la place de l'autre lorsque l'on fait pivoter le collier de 180 degrés de manière à inverser les bords avant 13A et arrière 13B de la ceinture. Ainsi, que le collier soit dans l'une ou l'autre de ces deux positions, le joint d'étanchéité 20 peut être correctement placé dans la ceinture.

La fenêtre 30 et la patte 32 qui viennent d'être évoquées servent, d'une part, à contribuer à la retenue axiale du joint d'étanchéité par rapport au collier. En effet, lorsque la patte est engagée dans la fenêtre, le contact entre la patte et le bord 30A de la fenêtre s'oppose aux déplacements axiaux du joint d'étanchéité par rapport au collier dans le sens R et également dans le sens opposé.

D'autre part, la fenêtre 30 et la patte 32 servent de détrompeur angulaire de joint d'étanchéité puisque le correct engagement de la patte dans la fenêtre détermine la position angulaire du joint d'étanchéité par rapport à la ceinture. Lorsque, comme dans l'exemple représenté, le collier est de type ouvert, ceci permet de s'assurer que les extrémités de la bande 22 dans laquelle est formé le joint d'étanchéité sont disposées dans un endroit autre que l'ouverture du collier.

En revenant à la figure 1, on constate que l'extrémité 1A du tube présente une fente 3 qui, en l'espèce, comprend une partie ouverte 3A, qui est ouverte sur l'extrémité libre 1A du tube et une partie de fenêtre 3B dont le contour est fermé ou quasi-fermé. Ainsi, l'extrémité 1A peut être serrée sur le tube 2A par une réduction du diamètre de l'extrémité 1A obtenue en réduisant la largeur de la fente 3. Cette fente 3 permet également de contribuer à la détermination de la position angulaire du tube par rapport au système de serrage. En effet, la partie ouverte 3A de la fente 3 peut recevoir la patte 32 précitée du joint d'étanchéité 20 lors de l'insertion de la partie 1A du tube dans l'espace annulaire formé entre le joint d'étanchéité et la ceinture 12. Ainsi, la patte 32 ne s'oppose pas à l'insertion du tube 1 jusqu'à la position voulue et, de plus, la coopération entre cette patte 32 et la fente 3A détermine la position angulaire du tube par rapport au joint d'étanchéité et donc par rapport au collier puisque la position angulaire du joint d'étanchéité par rapport au collier est elle-même déterminée.

Le dispositif selon le présent exposé comprend également un organe anti-extraction du joint d'étanchéité par rapport au tube 1. En l'espèce, le joint d'étanchéité 20 présente une languette anti-extraction 34 qui, en l'espèce, est formée par une languette découpée dans la bande 22 et légèrement redressé de telle sorte que son bord libre soit situé vers le bord avant 21A du joint d'étanchéité 20, alors que sa pliure 34' de rattachement à la partie courante de la bande est située vers l'arrière. Dans ces conditions, on comprend que, lors de l'engagement de l'extrémité 1A entre le joint d'étanchéité et le collier, la poussée de l'extrémité 1A dans le sens F vers l'avant (voir figures 1 et 2) tend à repousser la languette 34 vers l'intérieur. En d'autres termes, cette languette 34 s'efface lors de l'insertion de l'extrémité 1A du tube. Cependant, cette déformation de la languette est élastique, celle-ci pouvant ensuite se redresser dans la partie de fenêtre fermée 3B de la fente 3 du tube. Ainsi, la coopération entre la languette 34 et le bord avant 3B' de la fenêtre 3B s'oppose à l'extraction du joint d'étanchéité hors du tube dans le sens F.

Sur la figure 4, l'extrémité 1A du tube 1 est insérée entre le joint d'étanchéité 20 et la périphérie interne de la ceinture 12 du collier. On voit d'ailleurs que la languette 24B formée à l'extrémité 22B de la bande 22 dans laquelle est formé le joint d'étanchéité a avancé dans l'encoche 24A formée à l'extrémité 22A de cette même bande. Ainsi, les bords de la languette 24B coopèrent avec les bords 24'A de l'encoche 24A, de manière à former des zones de contact étanches. Par ailleurs, le joint d'étanchéité est retenu dans le collier et dans le tube par les pattes 28 et 32 précédemment évoquées, de même que par la languette 34 qui, sur la figure 4, est cachée par la ceinture. Dans cette situation, l'extrémité du tube 2 peut être insérée dans l'ensemble formé par le tube 1, le collier 10 et le joint d'étanchéité 20 pré-montés à l'extrémité 1A de ce tube 1.

On relève que le bord avant 2A du tube 2 présente une encoche 2'A. Cette encoche peut servir de détrompeur de position angulaire, en coopérant avec une patte de détrompeur 27 repliée vers l'intérieur sur le bord arrière du joint d'étanchéité 20. Cette patte 27 se distingue des pattes 26 précédemment évoquées en ce qu'elle est rabattue vers l'intérieur plus près du bord arrière 21B du joint d'étanchéité.

Comme indiqué précédemment, le collier de serrage est de type ouvert. En l'espèce, la ceinture porte des pattes de serrage respectivement 14A et 14B qui sont redressées radialement vers l'extérieur et entre lesquelles est définie une fente 15 définissant l'ouverture du collier. Ces pattes peuvent être déplacées l'une par rapport à l'autre pour serrer le collier. En l'espèce, ce déplacement est un déplacement de rapprochement, effectué à l'aide de tige de serrage 16A. Plus précisément, le collier comprend une vis de serrage 16 dont les extrémités sont retenues à l'arrière des pattes de serrage 14A et 14B, en l'espèce, respectivement par la tête 16B de la vis et un écrou 16C, éventuellement via une entretoise 16D. Dans le cas précis des pattes de serrage 14A et 14B, l'arrière d'une patte de serrage est le côté de cette patte qui est opposé à l'autre patte de serrage. Grâce au détrompeur angulaire précédemment évoqué, d'une part, la fente 3 du tube 1 est décalée angulairement par rapport à la fente 15 du collier 10 délimitée entre ses pattes de serrage et, d'autre part, les extrémités de la bande 22 dans laquelle est formé le joint d'étanchéité 20 sont également décalées angulairement par rapport aussi bien à la fente 3 du tube qu'à la fente 15 du collier.

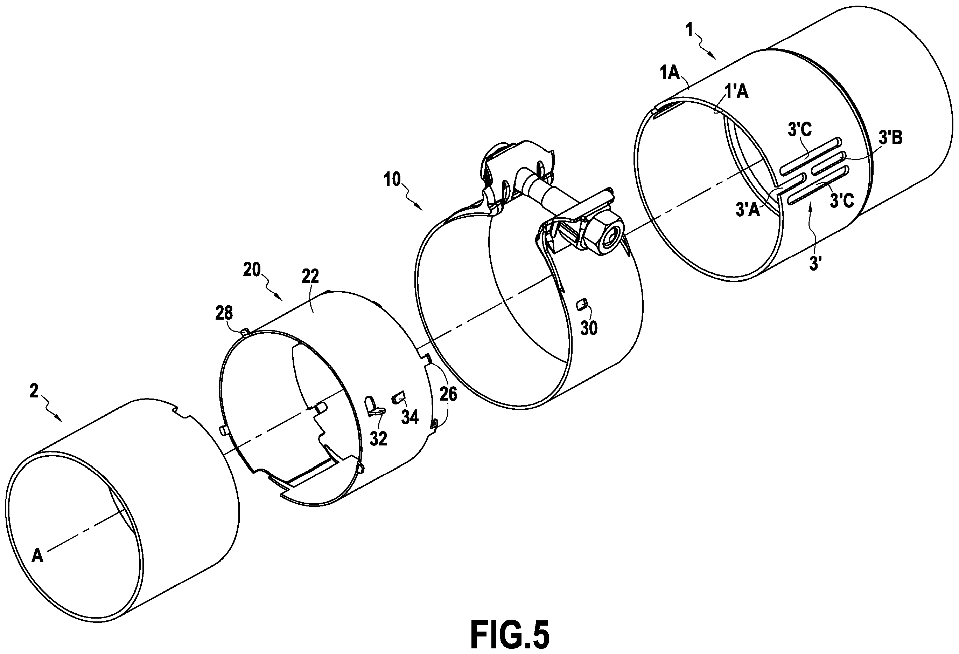

On décrit maintenant la figure 5 sur laquelle les mêmes références que sur les figures précédentes sont reprises, à l'exception de celles qui concernent la fente du tube 1. En effet, sur la figure 5, cette fente est désignée par la référence 3' et est formée par plusieurs fentes axiales élémentaires, en particulier une fente avant 3'A ouverte sur le bord libre 1'A du tube, une fente fermée 3'B située à l'arrière de cette fente 3'A et des fentes fermées latérales 3'C situées de part et d'autre des fentes 3'A et 3'B. Le système de serrage est analogue à celui qui vient d'être décrit, la seule différence étant le positionnement de la languette anti-extraction 34 qui est alignée axialement avec la patte 32 pour venir se loger dans la fente fermée 3'B du tube 1 lorsqu'il est engagé dans l'espace annulaire ménagé entre le joint d'étanchéité et le collier. On peut bien entendu choisir de positionner différemment la languette 34, par exemple pour qu'elle coopère avec l'une des fentes latérales 3'C.

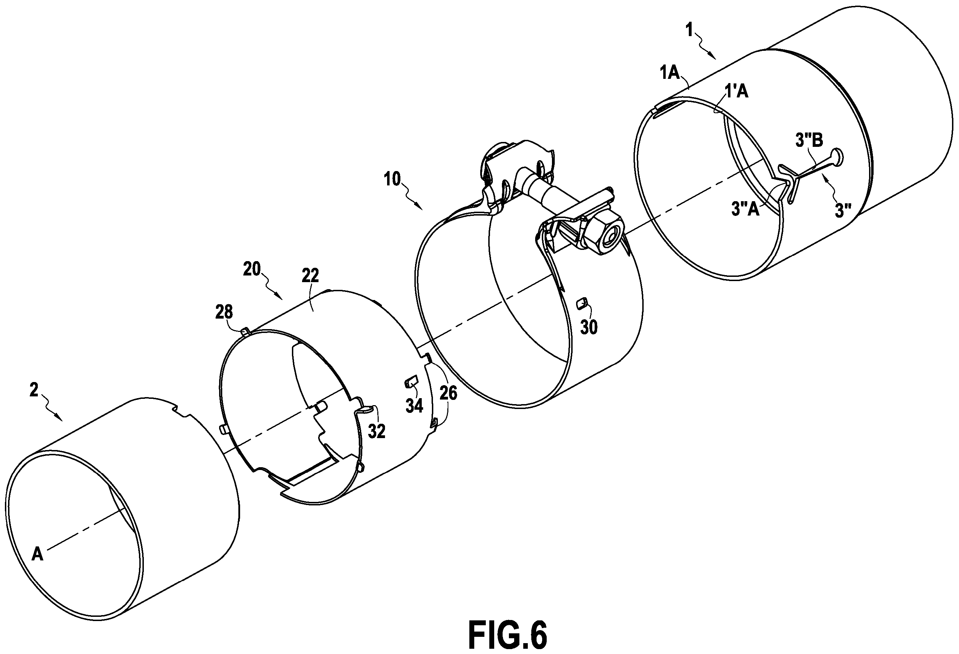

Dans l'exemple de la figure 6, la fente 3" du tube 1 est encore différente et présente en l'espèce une fente fermée 3"B sensiblement en Y et un renfoncement en V 3"A ménagé dans le creux formé entre les deux branches du Y, ce renfoncement en V étant ouvert sur le bord avant 1'A du tube 1. Dans ce cas, la patte 32 du joint d'étanchéité 20 est formée sur le bord avant 21A de ce joint d'étanchéité pour venir naturellement se loger dans le renfoncement 3"A. La languette anti-extraction 34 est sensiblement alignée avec cette patte 32 pour venir se loger dans une partie élargie de queue du Y 3"B.

Les figures 5 et 6 sont bien entendu des exemples montrant qu'il est possible avec différentes configurations de réaliser le détrompeur de position de tube et l'organe anti-extraction du joint d'étanchéité par rapport au tube.

Le joint d'étanchéité qui vient d'être décrit est initialement contraint vers la surface interne de la ceinture du collier. Cependant, l'extrémité du tube externe peut être engagée entre la surface interne de la ceinture et le joint d'étanchéité, en déformant élastiquement le joint d'étanchéité à l'encontre de sa contrainte initiale. Une fois l'insertion réalisée, le joint d'étanchéité a naturellement tendance à être contraint vers la périphérie interne du tube extérieur alors engagé dans le collier. Ainsi, le tube intérieur peut être facilement mis en place, le joint d'étanchéité ne constituant pas d'obstacle pour cette mise en place car il est plaqué contre la surface interne du tube extérieur et retenu axialement par rapport au collier. Le cas échéant, l'insertion de l'extrémité du tube extérieur entre le joint d'étanchéité et la ceinture du collier peut être favorisée par la présence de la au moins une rampe d'insertion. En particulier lorsque le collier est du type ouvert, la présence éventuelle d'un détrompeur angulaire de joint d'étanchéité peut permettre de faire en sorte que les extrémités de la bande dans laquelle est formé le joint d'étanchéité soient décalées par rapport à l'ouverture du collier.

On remarque que la ceinture du collier et le joint d'étanchéité présentent des diamètres sensiblement inchangés d'un bord à l'autre. Ainsi, la ceinture du collier et le joint d'étanchéité définissent des surfaces cylindriques. En particulier, ils sont formés à partir de bandes plates, enroulées sur elles-mêmes.

## Revendications

1. Dispositif de serrage comprenant un collier (10) qui présente une ceinture (12) apte à adopter un état non serré et un état serré dans lequel son diamètre est réduit par rapport à l'état non serré, et un joint d'étanchéité (20) disposé à l'intérieur de la ceinture (12) en étant retenu axialement par rapport au collier, le joint d'étanchéité étant formé dans une bande (22), qui est enroulée sur elle-même et dont les extrémités (22A, 22B) sont configurées pour coopérer entre elles via un agencement d'étanchéité (24), dans lequel le joint d'étanchéité est pré-monté dans la ceinture de sorte que le collier et le joint prémonté forment un composant, et dans lequel, dans l'état non serré de la ceinture, le joint d'étanchéité pré-monté disposé à l'intérieur de la ceinture subit une contrainte vers la surface interne de la ceinture, **caractérisé en ce que** le joint d'étanchéité est configuré pour, alors qu'il est pré-monté dans la ceinture, être déformé élastiquement à l'encontre de cette contrainte pour permettre l'insertion d'un objet annulaire entre le joint d'étanchéité et la ceinture (12) et **en ce que** le joint d'étanchéité (20) présente un bord arrière (21B) qui est pourvu d'au moins une rampe d'insertion (26) inclinée vers l'axe d'enroulement de la bande dans le sens allant en s'éloignant axialement du joint d'étanchéité à partir dudit bord arrière pour favoriser un rapprochement des extrémités de la bande permettant l'insertion dudit objet annulaire entre le joint d'étanchéité et la ceinture (12).

2. Dispositif selon la revendication 1, dans lequel le joint d'étanchéité (20) pré-monté est précontraint par la présence, autour dudit joint d'étanchéité, de la ceinture (12) dans l'état non serré.

3. Dispositif selon la revendication 2, dans lequel la contrainte du joint d'étanchéité (20) vers la surface interne (12A) de la ceinture (12) est provoquée par la tendance de la bande (22) à adopter un diamètre supérieur à celui imposé par la ceinture dans laquelle il est disposé alors que la ceinture est dans l'état non serré.

4. Dispositif selon l'une quelconque des revendications 1 à 3, dans lequel la rampe d'insertion est formée par une patte dont l'extrémité libre (26A) est infléchie vers l'intérieur.

5. Dispositif selon l'une quelconque des revendications 1 à 4, comprenant un détrompeur angulaire de joint d'étanchéité (30, 32) configuré pour déterminer une position angulaire du joint d'étanchéité par rapport au collier.

6. Dispositif selon l'une quelconque des revendications 1 à 5, dans lequel l'un des éléments formés par la ceinture (12) et le joint d'étanchéité (20) présente un bord de calage (13A) et l'autre élément présente une saillie de calage (28) apte à coopérer avec le bord de calage pour retenir le joint d'étanchéité (20) vis-à-vis d'un déplacement par rapport au collier.

7. Dispositif selon l'une quelconque des revendications 1 à 6, dans lequel le joint d'étanchéité (20) présente un bord avant (21A) pourvu d'au moins une butée (28) configurée pour coopérer avec le bord avant (13A) de la ceinture (12) pour retenir le joint d'étanchéité vis-à-vis d'un déplacement dans au moins une direction (R) par rapport à la ceinture, la butée (28) comprenant optionnellement une patte redressée vers l'extérieur.

8. Dispositif selon l'une quelconque des revendications 1 à 7, dans lequel la ceinture présente une fenêtre (30) dont le bord (30A) forme un bord de calage, et le joint d'étanchéité présente une patte de retenue (32) redressée dans cette fenêtre.

9. Dispositif selon l'une quelconque des revendications 1 à 8, dans lequel l'agencement d'étanchéité (24) comprend une conformation d'engagement mâle/femelle (24A, 24B) formée aux extrémités de la bande (22) formant le joint d'étanchéité.

10. Dispositif selon l'une quelconque des revendications 1 à 9, dans lequel la ceinture (12) et le joint d'étanchéité (20) présentent des diamètres sensiblement inchangés d'un bord à l'autre.

11. Dispositif selon l'une quelconque des revendications 1 à 10, dans lequel le collier (10) présente des pattes de serrage (14A, 14B), relevées radialement par rapport à la ceinture (12) et aptes à être déplacées l'une par rapport à l'autre pour serrer le collier.

12. Ensemble de serrage de tube, comprenant un dispositif de serrage selon l'une quelconque des revendications 1 à 11 et un tube (1) dont l'extrémité (1A) est apte à être insérée entre le joint d'étanchéité (20) et la ceinture (12).

13. Ensemble selon la revendication 12, comprenant un détrompeur de position de tube (32, 3A) déterminant une position angulaire du tube (1) par rapport au moins l'un des éléments comprenant le joint d'étanchéité (20) et le collier (10).

14. Ensemble selon la revendication 13, dans lequel le joint d'étanchéité présente une patte détrompeur de position de tube (32) qui fait radialement saillie vers l'extérieur du joint d'étanchéité (20) et qui est configurée pour être engagée dans une fente (3B) formée à l'extrémité du tube (1).

15. Ensemble selon l'une quelconque des revendications 12 à 14, dans lequel le joint d'étanchéité comprend un organe anti-extraction, en particulier une languette anti-extraction, configuré pour coopérer avec une fenêtre (3B, 3'B, 3"B) du tube (1) pour s'opposer à l'extraction du joint d'étanchéité hors du tube.

## Patentansprüche

1. Klemmvorrichtung, umfassend eine Schelle (10), die einen Ring (12) aufweist, der geeignet ist, einen nicht festgezogenen Zustand und einen festgezogenen Zustand anzunehmen, in dem sein Durchmesser gegenüber dem nicht festgezogenen Zustand reduziert ist, sowie eine Dichtung (20), die innerhalb des Rings (12) angeordnet ist, während sie in Bezug auf die Schelle axial gehalten ist, wobei die Dichtung aus einem Streifen (22) gebildet ist, der um sich selbst gewickelt ist und dessen Enden (22A, 22B) so ausgebildet sind, dass sie über eine Dichtungsanordnung (24) zusammenwirken, wobei die Dichtung in dem Ring vormontiert ist, so dass die Schelle und die vormontierte Dichtung eine Komponente bilden, und wobei die innerhalb des Rings angeordnete vormontierte Dichtung im nicht festgezogenen Zustand des Rings eine Beanspruchung in Richtung der Innenfläche des Rings erfährt, **dadurch gekennzeichnet, dass** die Dichtung dazu ausgebildet ist, während sie in dem Ring vormontiert ist, entgegen dieser Beanspruchung elastisch verformt zu werden, um das Einführen eines ringförmigen Gegenstands zwischen der Dichtung und dem Ring (12) zu ermöglichen, und dass die Dichtung (20) einen hinteren Rand (21B) aufweist, der mit wenigstens einer Einführrampe (26) versehen ist, die in der ausgehend von dem hinteren Rand sich von der Dichtung axial entfernenden Richtung zur Wickelachse des Streifens hin geneigt ist, um ein Annähern der Enden des Streifens zu begünstigen, was das Einführen des ringförmigen Gegenstands zwischen der Dichtung und dem Ring (12) ermöglicht.

2. Vorrichtung nach Anspruch 1, bei der die vormontierte Dichtung (20) durch das Vorhandensein des Rings (12) im nicht festgezogenen Zustand um die Dichtung herum vorgespannt ist.

3. Vorrichtung nach Anspruch 2, bei der die Beanspruchung der Dichtung (20) in Richtung der Innenfläche (12A) des Rings (12) dadurch hervorgerufen wird, dass der Streifen (22) dazu neigt, einen Durchmesser anzunehmen, der größer als derjenige ist, der durch den Ring auferlegt wird, in dem er angeordnet ist, während sich der Ring im nicht festgezogenen Zustand befindet.

4. Vorrichtung nach einem der Ansprüche 1 bis 3, bei der die Einführrampe durch eine Lasche gebildet ist, deren freies Ende (26A) nach innen gebogen ist.

5. Vorrichtung nach einem der Ansprüche 1 bis 4, umfassend eine winkelige Dichtungs-Unverwechselbarkeitseinrichtung (30, 32), die dazu ausgebildet ist, eine Winkelposition der Dichtung relativ zu der Schelle festzulegen.

6. Vorrichtung nach einem der Ansprüche 1 bis 5, bei der eines der durch den Ring (12) und die Dichtung (20) gebildeten Elemente einen Keilrand (13A) und das andere Element einen Keilvorsprung (28) aufweist, welcher geeignet ist, mit dem Keilrand zusammenzuwirken, um die Dichtung (20) gegenüber einer Bewegung relativ zu der Schelle festzuhalten.

7. Vorrichtung nach einem der Ansprüche 1 bis 6, bei der die Dichtung (20) einen vorderen Rand (21A) aufweist, der mit wenigstens einem Anschlag (28) versehen ist, welcher dazu ausgebildet ist, mit dem vorderen Rand (13A) des Rings (12) zusammenzuwirken, um die Dichtung gegenüber einer Bewegung in wenigstens einer Richtung (R) relativ zu dem Ring festzuhalten, wobei der Anschlag (28) optional eine nach außen aufgerichtete Lasche umfasst.

8. Vorrichtung nach einem der Ansprüche 1 bis 7, bei der der Ring ein Fenster (30) aufweist, dessen Rand (30A) einen Keilrand bildet, und die Dichtung eine in diesem Fenster aufgerichtete Haltelasche (32) aufweist.

9. Vorrichtung nach einem der Ansprüche 1 bis 8, bei der die Dichtungsanordnung (24) eine männliche/weibliche Eingriffsausbildung (24A, 24B) umfasst, die an den Enden des Streifens (22), welcher die Dichtung bildet, ausgebildet ist.

10. Vorrichtung nach einem der Ansprüche 1 bis 9, bei der der Ring (12) und die Dichtung (20) von einem Rand zum anderen im Wesentlichen unveränderte Durchmesser aufweisen.

11. Vorrichtung nach einem der Ansprüche 1 bis 10, bei der die Schelle (10) Klemmlaschen (14A, 14B) aufweist, die gegenüber dem Ring (12) radial aufgerichtet und geeignet sind, relativ zueinander bewegt zu werden, um die Schelle festzuziehen.

12. Anordnung zum Festklemmen eines Rohrs, umfassend eine Klemmvorrichtung nach einem der Ansprüche 1 bis 11 und ein Rohr (1), dessen Ende (1A) geeignet ist, zwischen die Dichtung (20) und den Ring (12) eingeführt zu werden.

13. Anordnung nach Anspruch 12, umfassend eine Unverwechselbarkeitseinrichtung für die Rohrposition (32, 3A), die eine Winkelposition des Rohrs (1) in Bezug auf wenigstens eines der Elemente, umfassend die Dichtung (20) und die Schelle (10), festlegt.

14. Anordnung nach Anspruch 13, bei der die Dichtung eine Lasche als Unverwechselbarkeitseinrichtung für die Rohrposition (32) aufweist, die von der Dichtung (20) radial nach außen vorsteht und die dazu ausgebildet ist, in einen Schlitz (3B), welcher am Ende des Rohrs (1) gebildet ist, einzugreifen.

15. Anordnung nach einem der Ansprüche 12 bis 14, bei der die Dichtung ein Herausziehsicherungselement, insbesondere eine Herausziehsicherungslasche umfasst, die dazu ausgebildet ist, mit einem Fenster (3B, 3'B, 3"B) des Rohrs (1) zusammenzuwirken, um dem Herausziehen der Dichtung aus dem Rohr entgegenzuwirken.

## Claims

1. A clamping device comprising a collar (10) which has a belt (12) able to adopt an unclamped state and a clamped state in which its diameter is reduced compared to the unclamped state, and a seal (20) disposed inside the belt (12) by being retained axially relative to the collar, the seal being formed in a strip (22), which is wound on itself and whose ends (22A, 22B) are configured to cooperate together via a sealing arrangement (24), wherein the seal is pre-mounted in the belt, so that the collar and the pre-mounted seal form a component, and wherein, in the unclamped state of the belt, the pre-mounted seal disposed inside the belt undergoes a stress towards the inner surface of the belt, **characterized in that** the seal is configured to, when pre-mounted in the belt, be elastically deformed against this stress to allow the insertion of an annular object between the seal and the belt (12), and **in that** the seal (20) has a rear edge (21B) which is provided with at least one insertion ramp (26) inclined towards the axis of winding of the strip in the direction moving away axially from the seal from said rear edge so as to promote the approach of the ends of the belts allowing insertion of said annular object between the seal and the belt (12).

2. The device according to claim 1, wherein the pre-mounted seal (20) is pre-stressed by the presence, around said seal, of the belt (12) in the unclamped state.

3. The device according to claim 2, wherein the stress of the seal (20) towards the inner surface (12A) of the belt (12) is caused by the tendency of the strip (22) to adopt a diameter greater than the diameter imposed by the belt in which it is disposed while the belt is in the unclamped state.

4. The device according to any one of claims 1 to 3, wherein the insertion ramp (26) is formed by a lug whose free end (26A) is bent inwardly.

5. The device according to any one of claims 1 to 4, comprising an angular seal key (30, 32) configured to determine an angular position of the seal relative to the collar.

6. The device according to any one of claims 1 to 5, wherein one of the elements formed by the belt (12) and the seal (20) has a wedge edge (13A) and the other element has a wedge protrusion (28) able to cooperate with the wedge edge to retain the seal (20) with respect to a movement relative to the collar.

7. The device according to any one of claims 1 to 6, wherein the seal (20) has a front edge (21A) provided with at least one abutment (28) configured to cooperate with the front edge (13A) of the belt (12) to retain the seal with respect to a movement in at least one direction (R) relative to the belt, the abutment (28) comprising optionally a lug bent outwardly.

8. The device according to any one of claims 1 to 7, wherein the belt has a window (30) whose edge (30A) forms a wedge edge, and the seal has a retaining lug (32) projecting in this window.

9. The device according to any one of claims 1 to 8, wherein the sealing arrangement (24) comprises a male/female engagement conformation (24A, 24B) formed at the ends of the strip (22) forming the seal.

10. The device according to any one of claims 1 to 9, wherein the belt (12) and the seal (20) have substantially unchanged diameters from one edge to the other.

11. The device according to any one of claims 1 to 10, wherein the collar (10) has clamping lugs (14A, 14B), raised radially relative to the belt (12) and able to be moved relative to each other to clamp the collar.

12. A tube clamping assembly, comprising a clamping device according to any one of claims 1 to 11 and a tube (1), whose end (1A) is able to be inserted between the seal (20) and the belt (12).

13. An assembly according to claim 12, comprising a tube position key (32, 3A) determining an angular position of the tube (1) relative to at least one of the elements comprising the seal (20) and the collar (10).

14. The assembly according to claim 13, wherein the seal has a tube position key lug (32) which radially protrudes outwardly from the seal (20) and which is configured to be engaged in a slot (3B) formed at the end of the tube (1).

15. The assembly according to any one of claims 12 to 14, wherein the seal comprises an anti-extraction member, particularly an anti-extraction tab, configured to cooperate with a window (3B, 3'B, 3"B) of the tube (1) to oppose the extraction of the seal from the tube.
